# EUROPEAN PATENT APPLICATION

(11) **EP 4 769 904 A1**
(43) Date of publication of application: **01.07.2026**
(21) Application number: 25222500.8
(22) Date of filing: 11.12.2025
(51) Int. Cl.: H02K 1/20, H02K 9/197

(54) **STATOR CORE**

(30) Priority: 24.12.2024 JP 2024227219
(71) Applicant: AISIN CORPORATION, Aichi 448-8650 (JP)
(72) Inventor: DEGUCHI, Shota, Kariya, 448-8650 (JP)
(74) Representative: Kramer Barske Schmidtchen Patentanwälte PartG mbB

(57) **Abstract**

Provided is a technique for reducing a possibility of uneven flow rates of a refrigerant. A stator core (100) is an annular stator core and includes: a first core (10) including first circumferential refrigerant paths (11) that are formed in a circumferential direction at a plurality of positions at a distance from one another and serve as flow paths for a refrigerant extending in the circumferential direction; a second core (20) including second circumferential refrigerant paths (21) that are formed in the circumferential direction at a plurality of positions at a distance from one another and serve as flow paths for the refrigerant extending in the circumferential direction; and a third core (30) in which a plurality of axial refrigerant paths (31) serving as flow paths for the refrigerant that extend in the axial direction and open at ends in the axial direction are formed. The first core (10) and the second core (20) are adjacent in the axial direction, each of two ends in the circumferential direction of the first circumferential refrigerant path (11) is connected to a different one of the two second circumferential refrigerant paths (21), and a plurality of the axial refrigerant paths (31) are connected to at least one of the first circumferential refrigerant paths (11) or one of the second circumferential refrigerant paths (21).

## Description

### TECHNICAL FIELD

This disclosure generally relates to a stator core.

### BACKGROUND DISCUSSION

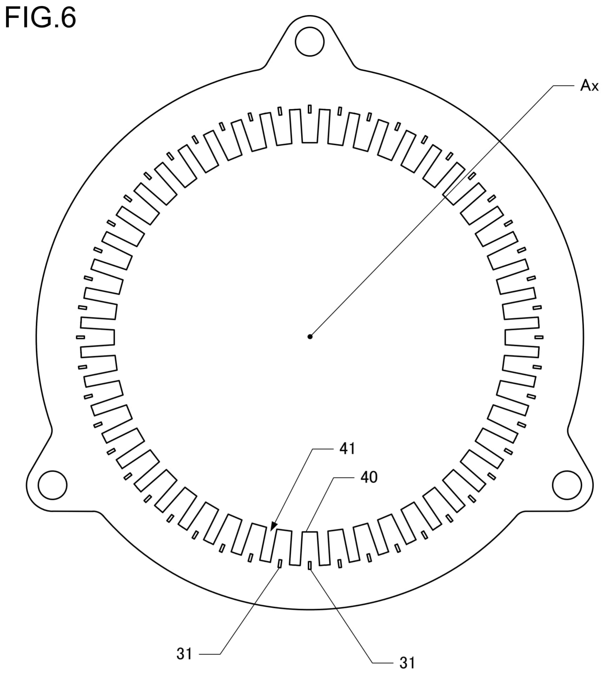

Conventionally, there is known a structure in which a refrigerant path serving as a flow path for a refrigerant is formed in a stator core and the refrigerant is caused to flow through the refrigerant path, thereby cooling the stator core. For example, CN217984694U (Reference 1) discloses a configuration in which a refrigerant path extending in a circumferential direction is connected to a refrigerant path extending radially inward (FIG. 6), and the refrigerant path extending radially is connected at an inner side in a radial direction to a refrigerant path extending in an axial direction.

In the conventional art described above, a plurality of the refrigerant paths extending in the circumferential direction are formed in the circumferential direction, and from each of the refrigerant paths extending in the circumferential direction, one refrigerant path extends in the radial direction and is connected to one refrigerant path extending in the axial direction. In other words, the refrigerant path extending in the circumferential direction and the refrigerant path extending in the axial direction are formed to make a pair on a one-to-one basis. In such a configuration, a large number of pairs of the refrigerant path extending in the circumferential direction and the refrigerant path extending in the axial direction exist and the large number of pairs are disposed across an entire circumference in the circumferential direction. In such a configuration, it is difficult to circulate the refrigerant in each of the pairs of the refrigerant paths in such a way that pressure is uniformly exerted on the refrigerant. When the pressure is not uniformly exerted on the refrigerant in each of the pairs of the refrigerant paths, flow rates of the refrigerant in the refrigerant paths become uneven.

A need thus exists for a technique for decreasing a possibility of occurrence of uneven flow rates of the refrigerant.

### SUMMARY

A stator core according to one embodiment is an annular stator core that includes: a first core including first circumferential refrigerant paths that are formed in a circumferential direction at a plurality of positions at a distance from one another and serve as flow paths for a refrigerant extending in the circumferential direction; a second core including second circumferential refrigerant paths that are formed in the circumferential direction at a plurality of positions at a distance from one another and serve as flow paths for the refrigerant extending in the circumferential direction; and a third core in which a plurality of axial refrigerant paths serving as flow paths for the refrigerant that extend in the axial direction and open at ends in the axial direction are formed. The first core and the second core are adjacent in the axial direction, each of two ends in the circumferential direction of the first circumferential refrigerant path is connected to a different one of the two second circumferential refrigerant paths, and a plurality of the axial refrigerant paths are connected to at least one of the first circumferential refrigerant paths or one of the second circumferential refrigerant paths.

In other words, in the stator core, the first circumferential refrigerant path and the second circumferential refrigerant path are connected to each other, and thus a refrigerant path in which the refrigerant flows in the circumferential direction is formed. Therefore, a possibility of occurrence of uneven flow rates of the refrigerant that flows in the first circumferential refrigerant path and the second circumferential refrigerant path can be reduced. In addition, since the axial refrigerant path is connected to at least one of the first circumferential refrigerant path and the second circumferential refrigerant path, the refrigerant can flow in the axial direction. In this configuration, two or more of the axial refrigerant paths are connected to at least one of the first circumferential refrigerant path and the second circumferential refrigerant path. Therefore, compared to a configuration in which only one axial refrigerant path is connected to at least one of the first circumferential refrigerant path and the second circumferential refrigerant path, a possibility of occurrence of uneven flow rates of the refrigerant that flows in the axial refrigerant path can be reduced.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a perspective view of a stator core;
FIG. 2 is an exploded perspective view of the stator core;
FIG. 3 is a diagram illustrating a state of a first core viewed in an axial direction;
FIG. 4 is a diagram illustrating a state of a second core viewed in the axial direction;
FIG. 5 is a diagram illustrating a state in which a first circumferential refrigerant path is overlaid on the second core viewed in the axial direction;
FIG. 6 is a diagram illustrating a state of a third core viewed in the axial direction;
FIG. 7 is a diagram illustrating a state in which the first circumferential refrigerant path is overlaid on the third core viewed in the axial direction;
FIG. 8 is a perspective view illustrating only refrigerant paths taken out from the stator core; and
FIG. 9 is a diagram illustrating a configuration example in which no axial refrigerant path exists.

### DETAILED DESCRIPTION

Embodiments of this disclosure will be explained herein in accordance with an order listed below.
(1) Configuration of a stator core
   (1-1) Configuration of a first core
   (1-2) Configuration of a second core
   (1-3) Configuration of a third core
(2) Other embodiments and the like

### (1) Configuration of a stator core

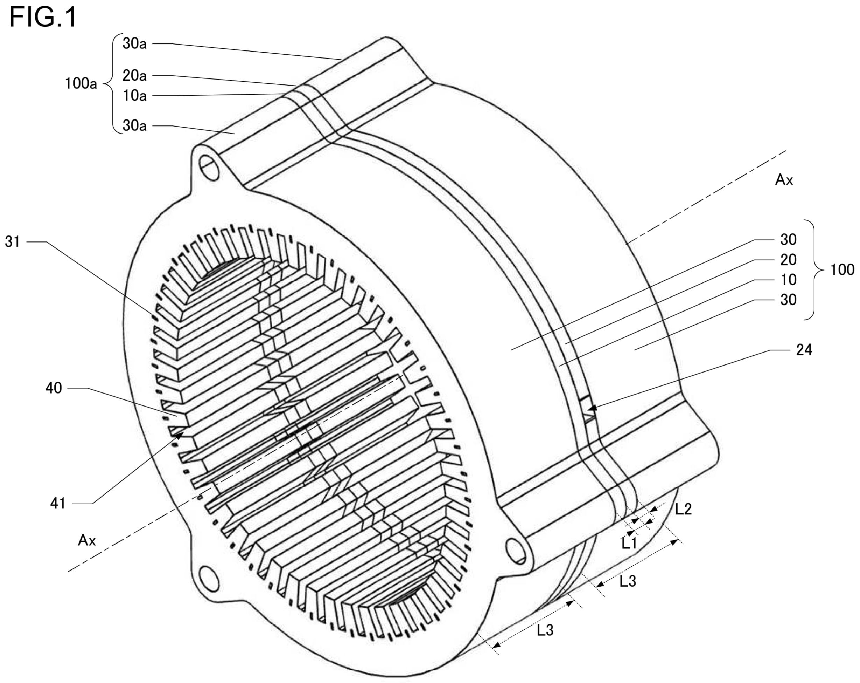

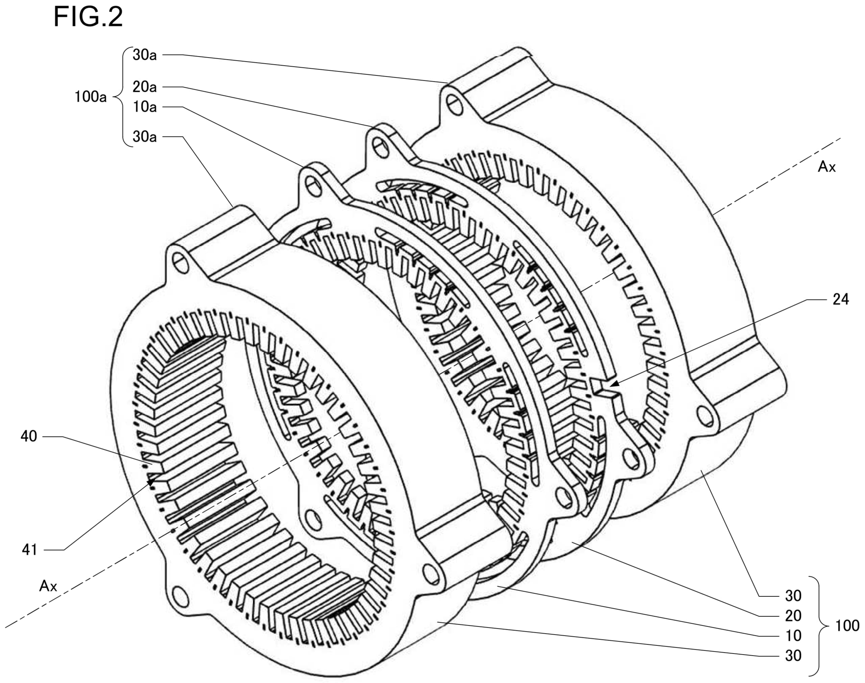

FIG. 1 is a perspective view of a stator core 100 according to this embodiment and FIG. 2 is an exploded perspective view of the stator core 100. The stator core 100 is an annular member, and in FIG. 1 and FIG. 2, a central axis Ax of a ring formed by the stator core 100 is indicated with a long dashed short dashed line. FIG. 2 illustrates the stator core 100 in a state exploded in a direction of the central axis Ax.

Inside the ring formed by the stator core 100, a rotor not illustrated is disposed. The rotor is a member that rotates about the central axis Ax of the ring formed by the stator core 100 serving as an axis of rotation. In this description, a direction parallel to the central axis Ax is referred to as an axial direction, a direction perpendicular to the central axis Ax is referred to as a radial direction, and a direction of rotation about the central axis Ax is referred to as a circumferential direction. In the radial direction, a direction away from the central axis Ax is referred to as radially outward and a direction toward the central axis Ax is referred to as radially inward.

The stator core 100 includes a plurality of teeth 40 arranged in the circumferential direction and a plurality of slots 41 formed between the teeth 40 in the circumferential direction. In this embodiment, the teeth 40 are portions that protrude radially inward from a radially inner surface of the stator core 100. The teeth 40 are formed in the circumferential direction at regular intervals across an entire inner circumference of the stator core 100. The number of the teeth 40 may vary. In this embodiment, cross-sectional shapes of the teeth 40 along a direction perpendicular to the axial direction are identical at any position in the axial direction. Therefore, the teeth 40 are portions that protrude radially inward from an outer side in the radial direction and at the same time, extend in the axial direction with the identical cross-sectional shapes along the direction perpendicular to the axial direction.

The slot 41 is a space formed between the teeth 40 in the circumferential direction. In the slot 41, a coil not illustrated is disposed.

In this embodiment, the stator core 100 is constructed of the first core 10, the second core 20, and the third core 30. The first core 10 and the second core 20 are located at the center in the axial direction and in this embodiment, a borderline between the first core 10 and the second core 20 is located at the center in the axial direction. The first core 10 and the second core 20 are sandwiched by a plurality of the third cores 30. In other words, the first core 10 and the second core 20 are in contact with each other at one face perpendicular to the axial direction with the other face in contact with the third core 30.

In this embodiment, the stator core 100 includes protruding sections 100a that protrude radially outward from a radially outer surface of a ring-shaped region. In this embodiment, the protruding sections 100a are formed at three positions in the stator core 100 and distances in the circumferential direction between the protruding sections 100 are equal. In other words, the protruding sections 100a are located at positions separated from one another by a rotation angle of 120° about the central axis Ax.

Widths of the protruding sections 100a in the circumferential direction gradually decrease radially outward. Therefore, when viewed in a direction parallel to the central axis Ax, the protruding sections 100a have a substantially triangular shape. In this embodiment, protruding sections 10a, 20a, 30a having an identical shape are respectively formed in the first core 10, the second core 20, and the third core 30. In the protruding sections 100a, a bolt hole penetrating through in the axial direction is formed. In other words, in each of the protruding sections 10a, 20a, 30a, a bolt hole having the same size and penetrating through in the axial direction is formed at the same position. The stator core 100 is fixed to a stationary part not illustrated with a bolt inserted into the bolt hole.

### (1-1) Configuration of the first core

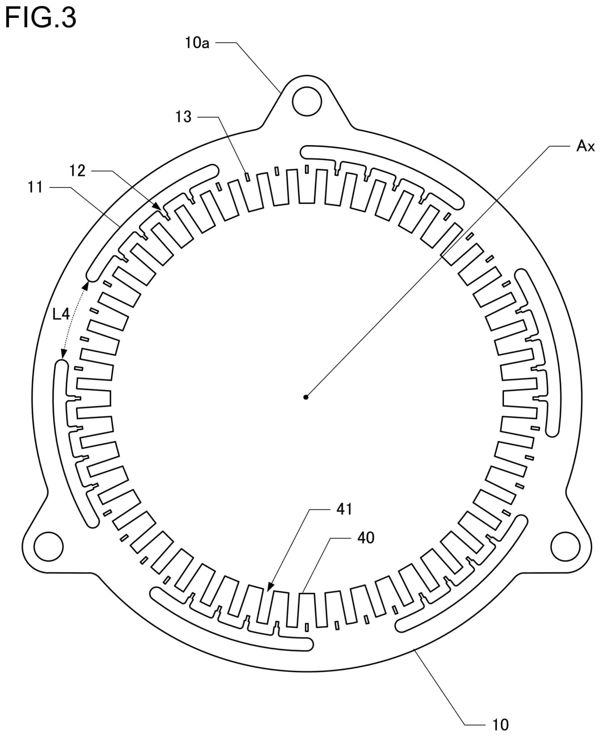

Next, a configuration of the first core 10 is described. In this embodiment, the first core 10 is constructed by stacking electrical steel sheets having a certain thickness. FIG. 3 is a diagram illustrating the electrical steel sheet composing the first core 10 viewed in a direction parallel to the central axis Ax. The first core 10 includes first circumferential refrigerant paths 11 that are formed in the circumferential direction at a plurality of positions at a distance from one another and serve as flow paths for a refrigerant extending in the circumferential direction.

In the first core 10, a plurality of the first circumferential refrigerant paths 11 are formed at positions radially outside with respect to the teeth 40. Specifically, holes that extend in the circumferential direction and have a certain length are formed at positions that are defined by equally dividing a region radially outside with respect to the teeth 40 in the circumferential direction, and the holes serve as the first circumferential refrigerant paths 11. In this embodiment, distances L4 between the adjoining first circumferential refrigerant paths 11 are uniform. The first circumferential refrigerant paths 11 as illustrated in FIG. 3 are formed at six positions in the first core 10. In other words, in this example, the first core 10 is divided into six sections in the circumferential direction and holes that extend in the circumferential direction and have a certain length are formed at positions that are defined by dividing the first core 10, and the holes serve as the first circumferential refrigerant paths 11 illustrated in FIG. 3.

In this embodiment, a sum of the lengths in the circumferential direction of a plurality of the first circumferential refrigerant paths 11 is longer than half the whole circumferential length in the circumferential direction. In this embodiment, lengths in the radial direction of the first circumferential refrigerant paths 11 are uniform except at both ends in the circumferential direction of the first circumferential refrigerant paths 11 and positions where connecting portions 12 to be described later are located. In addition, the first circumferential refrigerant paths 11 penetrate through the first core 10 in the axial direction.

In this embodiment, in the first core 10, a plurality of axial refrigerant paths 13 are formed at positions radially outside with respect to the teeth 40. Specifically, substantially rectangular holes are formed at positions radially outside with respect to the teeth 40 and radially inside with respect to the first circumferential refrigerant paths 11, the holes having long sides extending in the radial direction and short sides extending in the circumferential direction, and these holes serve as the axial refrigerant paths 13. The axial refrigerant paths 13 are substantially rectangular holes and shapes thereof are identical at any position in the axial direction. In other words, the axial refrigerant paths 13 are refrigerant paths extending in the axial direction and having an identical cross-sectional shape. The axial refrigerant paths 13 are connected to axial refrigerant paths 31 in the third core 30 to be described later.

In this embodiment, a plurality of the connecting portions 12 are formed in a radially inner wall surface of the first circumferential refrigerant path 11. The connecting portions 12 are holes extending in the radial direction and four connecting portions 12 are formed in one first circumferential refrigerant path 11. In this embodiment, the connecting portions 12 are portions that become gradually narrower radially inward, and the connecting portions 12 are connected to the first circumferential refrigerant paths 11 on a radially outer side and connected to the axial refrigerant paths 31 in the third core 30 to be described later on a radially inner side. In other words, radially inner portions of the connecting portions 12 have shapes that match the axial refrigerant paths 31 when viewed in the axial direction.

### (1-2) Configuration of the second core

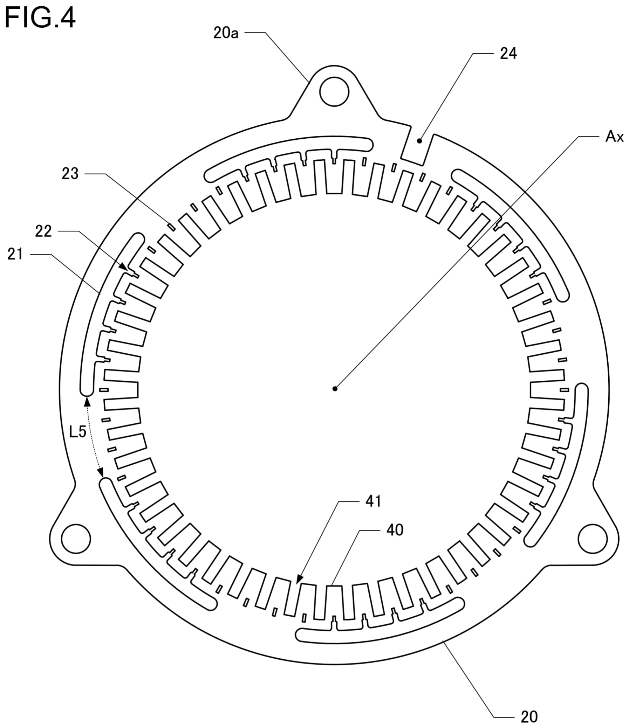

Next, a configuration of the second core 20 is described. In this embodiment, the second core 20 is constructed by stacking electrical steel sheets having a certain thickness. FIG. 4 is a diagram illustrating the electrical steel sheet composing the second core 20 viewed in a direction parallel to the central axis Ax. The second core 20 includes second circumferential refrigerant paths 21 that are formed in the circumferential direction at a plurality of positions at a distance from one another and serve as flow paths for the refrigerant extending in the circumferential direction.

In the second core 20, a plurality of the second circumferential refrigerant paths 21 are formed at positions radially outside with respect to the teeth 40. Specifically, holes that extend in the circumferential direction and have a certain length are formed at positions that are defined by equally dividing a region radially outside with respect to the teeth 40 in the circumferential direction, and the holes serve as the second circumferential refrigerant paths 21. In this embodiment, distances L5 between the adjoining second circumferential refrigerant paths 21 are uniform. The second circumferential refrigerant paths 21 as illustrated in FIG. 4 are formed at six positions in the second core 20. In other words, in this example, the second core 20 is divided into six sections in the circumferential direction and holes that extend in the circumferential direction and have a certain length are formed at positions that are defined by dividing the second core 20, and the holes serve as the second circumferential refrigerant paths 21 illustrated in FIG. 4.

In this embodiment, a sum of the lengths in the circumferential direction of a plurality of the second circumferential refrigerant paths 21 is longer than half the whole circumferential length in the circumferential direction. In this embodiment, lengths in the radial direction of the second circumferential refrigerant paths 21 are uniform except at both ends in the circumferential direction of the second circumferential refrigerant paths 21 and positions where connecting portions 22 to be described later are located. In addition, the second circumferential refrigerant paths 21 penetrate through the second core 20 in the axial direction.

In this embodiment, the lengths in the circumferential direction of the first circumferential refrigerant paths 11 and the lengths in the circumferential direction of the second circumferential refrigerant paths 21 are equal. When the first core 10 is placed in contact with the second core 20, the first circumferential refrigerant paths 11 are configured to be located in the circumferential direction in such a way that each of two ends in the circumferential direction of the first circumferential refrigerant paths 11 overlaps with a different one of the two adjoining second circumferential refrigerant paths 21 in the circumferential direction.

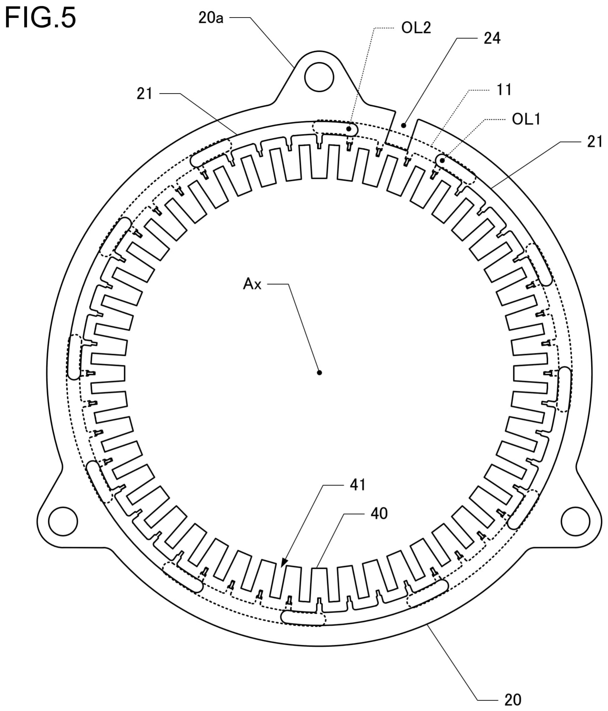

FIG. 5 is a diagram illustrating a state in which the first circumferential refrigerant path 11 is overlaid on the second circumferential refrigerant path 21, and the second core 20 is indicated with solid lines. In FIG. 5, positions of the first circumferential refrigerant paths 11 are indicated with dashed lines. In other words, the positions of the first circumferential refrigerant paths 11 when the first core 10 is in contact with the second core 20 are indicated with the dashed lines. As illustrated in FIG. 5, at one end in the circumferential direction, the first circumferential refrigerant path 11 overlaps with the second circumferential refrigerant path 21 in a region OL1. At the other end in the circumferential direction, the first circumferential refrigerant path 11 overlaps with the second circumferential refrigerant path 21 in a region OL2. With this configuration, the first circumferential refrigerant paths 11 and the second circumferential refrigerant paths are alternately catenated in the circumferential direction, and a series of refrigerant paths is formed across the entire circumference in the circumferential direction.

In this embodiment, in the second core 20, a plurality of axial refrigerant paths 23 are formed at positions radially outside with respect to the teeth 40 (see FIG. 4). Specifically, substantially rectangular holes are formed at positions radially outside with respect to the teeth 40 and radially inside with respect to the second circumferential refrigerant paths 21, the holes having long sides extending in the radial direction and short sides extending in the circumferential direction, and these holes serve as the axial refrigerant paths 23. The axial refrigerant paths 23 are substantially rectangular holes and shapes thereof are identical at any position in the axial direction. In other words, the axial refrigerant paths 23 are refrigerant paths extending in the axial direction and having an identical cross-sectional shape. The axial refrigerant paths 23 are connected to the axial refrigerant paths 31 in the third core 30 to be described later.

In this embodiment, a plurality of the connecting portions 22 are formed in a radially inner wall surface of the second circumferential refrigerant path 21. The connecting portions 22 are holes extending in the radial direction and four connecting portions 22 are formed in one second circumferential refrigerant path 21. In this embodiment, the connecting portions 22 are portions that become gradually narrower radially inward, and the connecting portions 22 are connected to the second circumferential refrigerant paths 21 on a radially outer side and connected to the axial refrigerant paths 31 in the third core 30 to be described later on a radially inner side. In other words, radially inner portions of the connecting portions 22 have shapes that match the axial refrigerant paths 31 when viewed in the axial direction.

In the second core 20, a supply port 24 for the refrigerant connected to the first circumferential refrigerant path 11 is further formed (see FIG. 1, FIG. 2, FIG. 4, and FIG. 5). In this embodiment, the supply port 24 is a hole formed radially outside with respect to the teeth 40 and the axial refrigerant paths 23, and when the second core 20 is viewed in the axial direction, the supply port 24 includes two sides substantially parallel to the radial direction and one side substantially parallel to the circumferential direction. In this embodiment, the supply port 24 is formed in the middle of the adjoining second circumferential refrigerant paths 21 in the circumferential direction. At a position adjacent to the supply port 24 in the axial direction, the first circumferential refrigerant path 11 is located (see FIG. 5). Therefore, the supply port 24 is connected to the first circumferential refrigerant path 11.

A width in the circumferential direction of the supply port 24 is uniform, and when the supply port 24 is viewed from the outside toward the inside in the radial direction, an opening formed by the supply port 24 that opens at an outer surface of the stator core 100 is rectangular. A shape of the supply port 24 in the radial direction is uniform. In other words, by forming a uniformly shaped rectangular hole to a certain depth in the radial direction, the supply port 24 is formed. The supply port 24 is an inlet for supplying the refrigerant, and the refrigerant supplied from the supply port 24 flows through the supply port 24, the first circumferential refrigerant paths 11 and the second circumferential refrigerant paths 21, the connecting portions 12 and the connecting portions 22, and the axial refrigerant paths 31, and is discharged from both ends in the axial direction. It should be noted that the supply port 24 may be formed in the first core 10.

### (1-3) Configuration of the third core

Next, a configuration of the third core 30 is described. In this embodiment, the third core 30 is constructed by stacking electrical steel sheets having a certain thickness. FIG. 6 is a diagram illustrating the electrical steel sheet composing the third core 30 viewed in a direction parallel to the central axis Ax. The third core 30 is a member in which a plurality of the axial refrigerant paths 31 serving as a plurality of flow paths for the refrigerant that are connected to at least one of the first circumferential refrigerant paths 11 or one of the second circumferential refrigerant paths 21 are formed, the axial refrigerant paths 31 extending in the axial direction and opening at ends in the axial direction.

In the third core 30, a plurality of the axial refrigerant paths 31 are formed at positions radially outside with respect to the teeth 40. Specifically, substantially rectangular holes are formed at positions radially outside with respect to the teeth 40 and radially inside with respect to the first circumferential refrigerant paths 11 and the second circumferential refrigerant paths 21, the holes having long sides extending in the radial direction and short sides extending in the circumferential direction, and these holes serve as the axial refrigerant paths 31.

The axial refrigerant paths 31 are substantially rectangular holes and shapes thereof are identical at any position in the axial direction. In other words, the axial refrigerant paths 31 are refrigerant paths extending in the axial direction and having an identical cross-sectional shape. In this embodiment, the axial refrigerant paths 31 are formed at positions corresponding to those of the teeth 40. Therefore, the number of the axial refrigerant paths 31 located in the circumferential direction is the same as that of the teeth 40. With this configuration, each of the teeth 40 can be cooled by the refrigerant flowing inside each of the axial refrigerant paths 31.

Positions in the radial and circumferential directions of some of the axial refrigerant paths 31 are the same as those of the axial refrigerant paths 13 formed in the first core 10 and the axial refrigerant paths 23 formed in the second core 20. Positions in the radial and circumferential directions of the axial refrigerant paths 31 other than the some are the same as those of the radially inner portions of the connecting portions 12 formed in the first core 10 and the radially inner portions of the connecting portions 22 formed in the second core 20. Therefore, extended lines of the axial refrigerant paths 31 compose holes that penetrate through the stator core 100 in the axial direction.

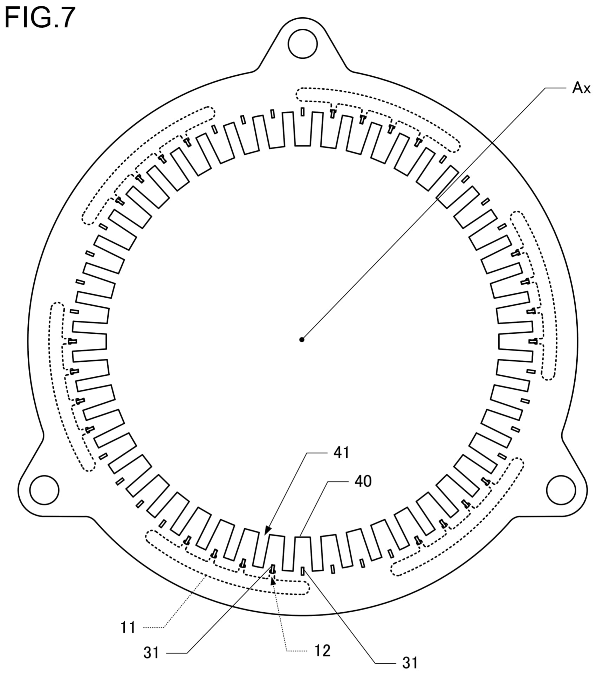

FIG. 7 is a diagram illustrating a state in which the first circumferential refrigerant path 11 is overlaid on the third core 30 illustrated in FIG. 6. As illustrated in FIG. 7, the axial refrigerant paths 31 are connected to the connecting portions 12 in the first core 10 in the axial direction. Therefore, the refrigerant flowing through the first circumferential refrigerant paths 11 flows in the axial direction through the axial refrigerant paths 31. The axial refrigerant paths 31 open, as illustrated in FIG. 1, at the ends in the axial direction. Therefore, the refrigerant that has flown through the axial refrigerant paths 31 and reached openings is discharged from the openings. Similarly, the axial refrigerant paths 31 are connected to the connecting portions 22 in the second core 20 in the axial direction.

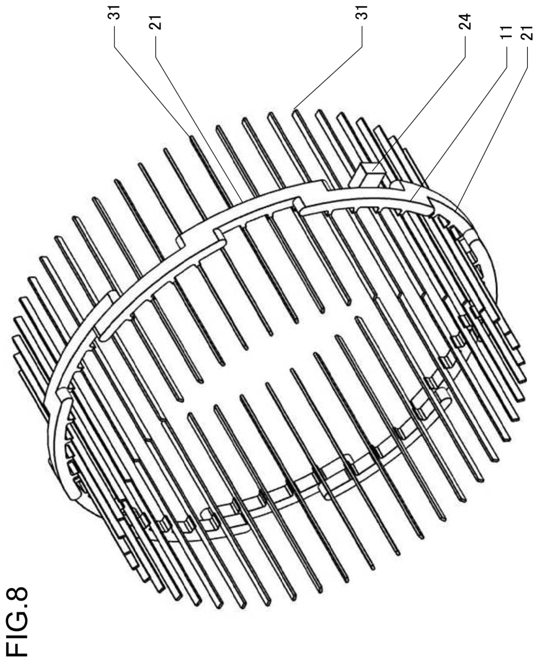

With the configuration described above, the refrigerant paths from the supply port to the outlet port are formed. FIG. 8 illustrates shapes of spaces serving as the refrigerant paths. Specifically, FIG. 8 illustrates that the first circumferential refrigerant path 11 is connected to a refrigerant path extending from the supply port 24 in the radial direction, and the second circumferential refrigerant path 21 is connected to the two ends in the circumferential direction of the first circumferential refrigerant path 11. In addition, FIG. 8 illustrates that the second circumferential refrigerant path 21 is connected to the two ends in the circumferential direction of each of the first circumferential refrigerant paths 11 and the first circumferential refrigerant path 11 is connected to the two ends in the circumferential direction of each of the second circumferential refrigerant paths 21. In addition, FIG. 8 illustrates that a plurality of the axial refrigerant paths 31 are connected to each of the first circumferential refrigerant paths 11 and each of the second circumferential refrigerant paths 21. It is found that, with the configuration described above, the refrigerant supplied from the supply port 24 flows in the refrigerant paths extending in the circumferential direction and formed by the first circumferential refrigerant paths 11 and the second circumferential refrigerant paths 21, the refrigerant further flows toward both ends in the axial direction through the axial refrigerant paths 31, and the refrigerant is discharged from the ends in the axial direction of the axial refrigerant paths 31.

As described above, in this embodiment, the first circumferential refrigerant paths 11 and the second circumferential refrigerant paths 21 are connected to one another, thereby forming continuous refrigerant paths in which the refrigerant flows in the circumferential direction. Thus, compared to a state in which refrigerant paths in the circumferential direction are separated, a possibility of flow rates of the refrigerant that flows in the first circumferential refrigerant path and the second circumferential refrigerant path becoming uneven can be reduced.

In addition, since the axial refrigerant paths 31 are connected through the connecting portions 12, 22 to the first circumferential refrigerant paths 11 and the second circumferential refrigerant paths 21, the refrigerant can flow in the axial direction. In this configuration, for the first circumferential refrigerant paths 11 and the second circumferential refrigerant paths 21, a plurality of the axial refrigerant paths 31 are connected to each one of the circumferential refrigerant paths. Therefore, compared to a configuration in which only one axial refrigerant path is connected to the first circumferential refrigerant path 11 and the second circumferential refrigerant path 21, a possibility of flow rates of the refrigerant that flows in the axial refrigerant path 31 becoming uneven can be reduced.

In this embodiment, the stator core 100 is constructed of the first core 10, the second core 20, and the third core 30. Therefore, the stator core 100 can be constructed by stacking three types of electrical steel sheets. Thus, the stator core 100 can be constructed of a small variety of electrical steel sheets.

The electrical steel sheets composing the stator core 100 forms a magnetic path. When a region that can be a magnetic path is larger, a torque of a motor in which the stator core 100 is used becomes higher. In other words, when a size of a hole existing in the stator core 100 is smaller and a volume occupied by the electrical steel sheets is larger, the torque of the motor in which the stator core 100 is used becomes higher.

In the first core 10 and the second core 20 according to this embodiment, the first circumferential refrigerant paths 11 and the second circumferential refrigerant paths 21 are formed at a plurality of positions in the circumferential direction. In the first core 10 and the second core 20, holes equivalent to the axial refrigerant paths 31 in the third core 30 are also formed. Therefore, in the stator core 100, the holes formed as the refrigerant paths in the central region where the first core 10 and the second core 20 are located are larger than the holes formed in the region where the third core 30 is located. Thus, in this embodiment, the volume occupied by the electrical steel sheets in the third core 30 is larger compared to those in the first core 10 and the second core 20.

In this embodiment, a sum of a length L1 in the axial direction of the first core 10 and a length L2 in the axial direction of the second core 20 is smaller than a sum of lengths L3 in the axial direction of the third cores 30 (see FIG. 1). Therefore, an amount used of the third core 30 in which the volume occupied by the electrical steel sheets is larger is larger, and amounts used of the first core 10 and the second core 20 in which the holes are larger are limited. According to this embodiment having such a configuration, a torque of a motor is not excessively reduced.

In this embodiment, although the first core 10 and the second core 20 are located in the central region in the axial direction of the stator core 100, the refrigerant paths in the circumferential direction are formed in the first core 10 and the second core 20, and the central region in the axial direction can be easily cooled. Typically, heat from the stator core 100 or a rotor not illustrated tends to accumulate in the central region in the axial direction of the stator core 100 compared to the ends in the axial direction, the central region in the axial direction however can be efficiently cooled in this embodiment. Thus, regions where heat tends to accumulate can be efficiently cooled.

In addition, the connecting portions 12, 22 according to this embodiment become gradually narrower radially inward. In other words, while the refrigerant moves from the first circumferential refrigerant paths 11 and the second circumferential refrigerant paths 21 toward the axial refrigerant paths 31, abrupt change of a size of the cross-sectional area perpendicular to the flow of the refrigerant path can be prevented. Therefore, compared to a configuration in which the connecting portions 12, 22 connected to the first circumferential refrigerant paths 11 and the second circumferential refrigerant paths 21 have a certain cross-sectional area, for example, a cross-sectional area equivalent to that of the axial refrigerant path 31, pressure loss when the refrigerant moves into the axial refrigerant paths 31 can be reduced. Thus, according to this embodiment, a possibility that the flow of the refrigerant from the first circumferential refrigerant paths 11 and the second circumferential refrigerant paths 21 to the axial refrigerant paths 31 is adversely affected can be reduced.

In addition, in this embodiment, in a plane perpendicular to the axial direction, a sum of areas of regions where the first circumferential refrigerant paths 11 and the second circumferential refrigerant paths 21 overlap is larger than a cross-sectional area perpendicular to the flow of the supply port 24. Specifically, a sum of areas of the region OL1 and the region OL2 illustrated in FIG. 5 perpendicular to the axial direction is larger than the cross-sectional area of the supply port 24 illustrated in FIG. 1 and FIG. 2 perpendicular to the radial direction.

Therefore, the refrigerant that has flown from the supply port 24 can move through a refrigerant path having a larger cross-sectional area when the refrigerant moves toward the first circumferential refrigerant path 11 and the second circumferential refrigerant path 21. With this configuration, pressure loss when the refrigerant moves can be reduced compared to a configuration in which the cross-sectional area of the refrigerant path is smaller. As a result, a possibility that the flow of the refrigerant is adversely affected can be reduced.

In this embodiment, the areas of the region OL1 and the region OL2 perpendicular to the axial direction are equal. Therefore, when the refrigerant that has flown from the supply port 24 flows into the first circumferential refrigerant path 11 and subsequently into the second circumferential refrigerant path 21, the flow of the refrigerant in the circumferential direction into the flow paths does not become uneven and the flow rates are equal.

In addition, in this embodiment, after flowing from the supply port 24, the refrigerant flows and moves through every refrigerant path, that is, the first circumferential refrigerant paths 11, the second circumferential refrigerant paths 21, and the axial refrigerant paths 31. In this embodiment, an effective cross-sectional area of the refrigerant paths through which the refrigerant flows while the refrigerant moves is configured to gradually increase. In other words, the effective cross-sectional area perpendicular to the flow of the refrigerant paths from the supply port 24 to the openings at the ends of the axial refrigerant paths 31 in the axial direction gradually increases.

Specifically, the sum of the areas of the region OL1 and the region OL2 illustrated in FIG. 5 perpendicular to the axial direction is larger than the cross-sectional area of the supply port 24 illustrated in FIG. 1 and FIG. 2 perpendicular to the radial direction. In addition, a sum of areas of the axial refrigerant paths 31 illustrated in FIG. 6 perpendicular to the axial direction is larger than the sum of the areas of the region OL1 and the region OL2 illustrated in FIG. 5 perpendicular to the axial direction. The effective cross-sectional area is a sum of the cross-sectional areas perpendicular to the flow of the refrigerant of the refrigerant paths.

With this configuration, when the refrigerant that has flown from the supply port 24 flows and moves through every refrigerant path, that is, the first circumferential refrigerant paths 11, the second circumferential refrigerant paths 21, and the axial refrigerant paths 31, the cross-sectional area of the refrigerant paths gradually increases when comparison is made among the cross-sectional areas of a series of the refrigerant paths from upstream to downstream at a plurality of points. Therefore, pressure loss when the refrigerant moves can be reduced compared to a configuration in which the cross-sectional area of the refrigerant path is smaller. As a result, a possibility that the flow of the refrigerant is adversely affected can be reduced.

### (2) Other embodiments and the like

The embodiment described above is an example of implementing this disclosure, but other various embodiments may be employed. For example, the number, dimensions, shapes, and the like of the first circumferential refrigerant paths 11 and the second circumferential refrigerant paths 21 may be different from those in the embodiment described above. The number of the first circumferential refrigerant paths 11 in the circumferential direction and the number of the second circumferential refrigerant paths 21 in the circumferential direction may be smaller than half the number of slots in the circumferential direction. Positions of the first circumferential refrigerant paths 11 and the second circumferential refrigerant paths 21 in the axial direction are different. Therefore, when the refrigerant circulates through a series of refrigerant paths formed in the circumferential direction by a plurality of the first circumferential refrigerant paths 11 and a plurality of the second circumferential refrigerant paths 21, the refrigerant moves in the circumferential direction and at the same time, in the axial direction at borders between the first circumferential refrigerant paths 11 and the second circumferential refrigerant paths 21. Thus, when the number of the first circumferential refrigerant paths 11 in the circumferential direction and the number of the second circumferential refrigerant paths 21 in the circumferential direction are smaller, changes in positions of the refrigerant in the axial direction become smaller and pressure loss can be reduced. Especially in a low temperature environment, since viscosity of the refrigerant is high, the flow of the refrigerant is more likely to be affected by pressure loss.

In addition, the stator core 100 is not necessarily required to have a configuration in which the axial refrigerant paths 31 are formed inside the stator core 100, and for example, the stator core 100 may have a configuration in which the refrigerant flows in the slots, in other words, the slots serve as the axial refrigerant paths 31.

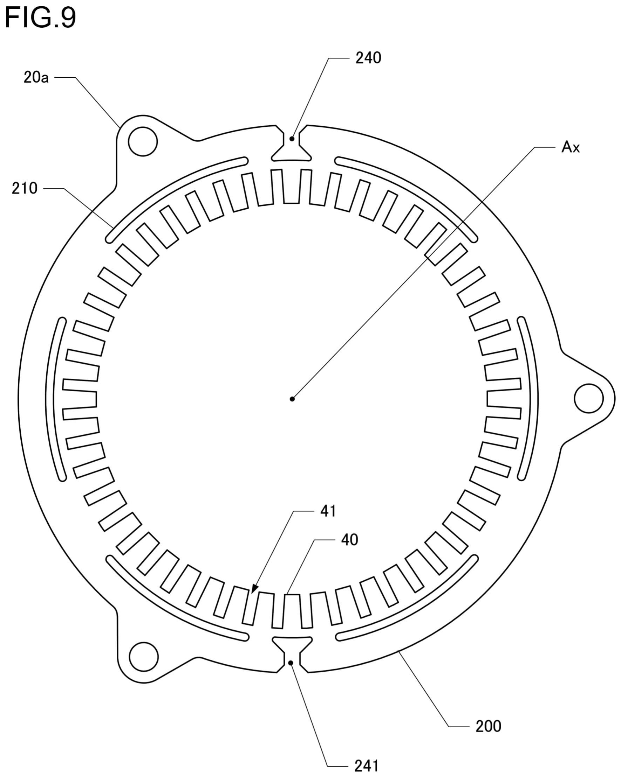

In addition, the stator core 100 may have a configuration in which the axial refrigerant paths 31 are not formed. In other words, while a series of refrigerant paths is formed in the circumferential direction by the first core 10 and the second core 20, the stator core 100 may have a configuration in which the axial refrigerant paths 31 are not formed or a configuration in which the refrigerant paths in the circumferential direction are not connected to the axial refrigerant paths. FIG. 9 is a diagram illustrating an example configuration of a second core 200 in which no axial refrigerant path 31 is formed. In FIG. 9, the same reference signs denote the same components as those in the second core 200 illustrated in FIG. 4. The second core 200 includes second circumferential refrigerant paths 210 similar to those in the second core 20, but the second core 200 does not include the connecting portions 22. In addition, the second core 200 does not include the axial refrigerant path 23 either.

A supply port 240 has a shape different from that of the supply port 24, and the supply port 240 is configured to have a width that becomes wider radially inward and radially outward. In the second core 200, an outlet port 241 having the identical shape as the supply port 240 is formed at a position obtained by rotating the supply port 240 about the central axis Ax 180° in the circumferential direction.

The second core 200 is used together with a first core that is similar to the first core 10, but the first core does not include the connecting portion 22 and the axial refrigerant path 13 in a first circumferential refrigerant path either. The first core and the second core 200 as described are used in a state in which they are sandwiched by a plurality of third cores, but the third cores do not need to include the axial refrigerant path 31. In the configuration as described above, since the stator core 100 does not include the axial refrigerant path, the refrigerant does not move across an entire region in the axial direction, but move across an entire circumference in the circumferential direction. With this configuration, the central region of the stator core 100 can be cooled with the refrigerant.

In the configuration as illustrated in FIG. 9, a pump for causing the refrigerant to flow in the stator core 100 can be omitted. Specifically, the supply port 240 is disposed at the uppermost position in the vertical direction and the outlet port 241 is disposed at the lowermost position in the vertical direction. With this configuration, the refrigerant supplied to the supply port 240 can be caused to flow inside the first circumferential refrigerant path and the second circumferential refrigerant path 210 due to the refrigerant's own weight and discharge from the outlet port 241. With this configuration, the stator core 100 can be cooled without using a pump.

The stator core is fixed to a stationary part and just needs to be able to apply a magnetic field on the rotor. The stator core is typically an annular member and includes a plurality of teeth. The teeth just need to be portions which a coil is wound onto or disposed on, and the number, the dimension, and the like thereof are not limited. The stator core is annular, but a shape of a ring, for example, an outer circumferential shape, an inner circumferential shape, and the like are not limited. For example, the outer circumferential shape may be a polygonal shape.

The first core just needs to be a member that includes first circumferential refrigerant paths that are formed in the circumferential direction at a plurality of positions at a distance from one another and serve as flow paths for the refrigerant extending in the circumferential direction. In other words, the first core just needs to include the first circumferential refrigerant paths formed in a section provided by dividing the first core in the circumferential direction. The first circumferential refrigerant paths are flow path extending in the circumferential direction and therefore, serve as flow paths for the refrigerant to flow along the circumferential direction. Consequently, the first core causes the refrigerant to flow through each of the first circumferential refrigerant paths formed at a plurality of the positions in the circumferential direction. Distances between the first circumferential refrigerant paths in the circumferential direction, circumferential, radial, or axial dimensions of the first circumferential refrigerant paths, the number of the first circumferential refrigerant paths, and the like are not limited, and may be variously configured. For example, the distances between the first circumferential refrigerant paths do not need to be uniform, and the circumferential dimensions of the first circumferential refrigerant paths do not need to be uniform.

The second core just needs to be a member that includes second circumferential refrigerant paths that are formed in the circumferential direction at a plurality of positions at a distance from one another and serve as flow paths for the refrigerant extending in the circumferential direction. In other words, the second core just needs to include the second circumferential refrigerant paths formed in a section provided by dividing the second core in the circumferential direction. The second circumferential refrigerant paths are flow path extending in the circumferential direction and therefore, serve as flow paths for the refrigerant to flow along the circumferential direction. Consequently, the second core causes the refrigerant to flow through each of the second circumferential refrigerant paths formed at a plurality of the positions in the circumferential direction. Distances in the circumferential direction between the second circumferential refrigerant paths, circumferential, radial, or axial dimensions of the second circumferential refrigerant paths, the number of the second circumferential refrigerant paths, and the like are not limited, and may be variously configured. For example, the distances between the second circumferential refrigerant paths do not need to be uniform, and the circumferential dimensions of the second circumferential refrigerant paths do not need to be uniform.

It should be noted that the second circumferential refrigerant paths are connected to the first circumferential refrigerant paths. In other words, the first core and the second core are adjacent in the axial direction, and each of two ends in the circumferential direction of the first circumferential refrigerant paths is connected to a different one of the two second circumferential refrigerant paths. Consequently, one end of the first circumferential refrigerant path is connected to one of the two second circumferential refrigerant paths, and another second circumferential refrigerant path adjoining the one is connected to the other end of the first circumferential refrigerant path. It can be said that this configuration is a configuration in which each of two ends of the second circumferential refrigerant paths is connected to a different one of the first circumferential refrigerant paths.

The third core is a member in which a plurality of axial refrigerant paths are formed. A plurality of the axial refrigerant paths are flow paths for the refrigerant that extend in the axial direction and open at the ends in the axial direction. And a plurality of the axial refrigerant paths are connected to at least one of the first circumferential refrigerant paths or one of the second circumferential refrigerant paths. In other words, the third core just needs to achieve a state in which a plurality of the axial refrigerant paths are connected to one of the circumferential refrigerant paths.

A plurality of the axial refrigerant paths may be connected to both or only one of the first circumferential refrigerant path and the second circumferential refrigerant path. In the latter case, the other of the first circumferential refrigerant path and the second circumferential refrigerant path does not need to be connected to the axial refrigerant path or may be connected to one of the axial refrigerant paths. Since the axial refrigerant paths extend in the axial direction and open at the ends in the axial direction, the refrigerant can flow through an entire length of the third core in the axial direction and be cooled. Circumferential or radial dimensions of the axial refrigerant paths, the number of the axial refrigerant paths, and the like are not limited, and may be variously configured. For example, the number of the axial refrigerant paths connected to one of the circumferential refrigerant paths is not limited to four and may be two or more.

The first core, the second core, and the third core may be constructed by joining a plurality of members. For example, the first core, the second core, and the third core may be constructed by stacking a plurality of thin electrical steel sheets.

The first core and the second core may be located in the central region in the axial direction of the stator core. In other words, since heat from the stator core or the rotor tends to accumulate in the central region in the axial direction of the stator core, the first core and the second core that constitute the circumferential refrigerant paths just need to be disposed in the central region and facilitate the heat in the central region to transfer. As long as this is satisfied, the central region is not necessarily required to be located strictly at the center in the axial direction, and the first core and the second core may be located off the center in the axial direction. For example, either the first core or the second core may be disposed at a central position in the axial direction.

The connecting portion just needs to be a portion that connects each of the first circumferential refrigerant paths and each of the second circumferential refrigerant paths to the axial refrigerant path, and at the same time, a refrigerant path that extends in the radial direction and becomes narrower toward the axial refrigerant path. In other words, since the axial refrigerant path formed in the third core and the first circumferential refrigerant paths and the second circumferential refrigerant paths are located at different positions in the radial direction, the connecting portion just needs to be formed in such a way as to connect the axial refrigerant path to the first circumferential refrigerant path and the second circumferential refrigerant path.

The connecting portion just needs to be formed in such a way as to extend in the radial direction and become narrower toward the axial refrigerant path. In other words, a diameter of the connecting portion just needs to be adjusted in such a way as not to adversely affect the flow of the refrigerant from each of the first circumferential refrigerant paths and each of the second circumferential refrigerant paths toward the axial refrigerant paths. As long as this is satisfied, the shape of the connecting portion is not limited. For example, a cross-sectional shape perpendicular to the flow of the connecting portion may have a rectangular shape or various other shapes. The connecting portion is not necessarily required to be formed in such a way as to have a width that becomes narrower along the radial direction, and may become continuously or gradually narrower. The stator core may employ a configuration in which no connecting portion exists. For example, the position of the axial refrigerant path 31 in the radial direction may coincide with the positions of the first circumferential refrigerant paths 11 and the second circumferential refrigerant paths 21 in the radial direction. With this configuration, the refrigerant in the first circumferential refrigerant paths 11 and the second circumferential refrigerant paths 21 can be caused to flow, without flowing through the connecting portions, into the axial refrigerant paths 31.

The supply port for the refrigerant just needs to be a supply port for the refrigerant to flow into the stator core, and the supply port is formed in either the first core or the second core. When the supply port connected to the second circumferential refrigerant path is formed in the first core, the supply port does not need to be formed in the second core. When the supply port connected to the first circumferential refrigerant path is formed in the second core, the supply port does not need to be formed in the first core. The supply port just needs to form a refrigerant path through which the refrigerant can be caused to flow into the circumferential refrigerant path, and dimensions and shapes thereof are not limited.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A stator core (100) being an annular stator core, comprising:
a first core (10) including first circumferential refrigerant paths (11) that are formed in a circumferential direction at a plurality of positions at a distance from one another and serve as flow paths for a refrigerant extending in the circumferential direction;
a second core (20) including second circumferential refrigerant paths (21) that are formed in the circumferential direction at a plurality of positions at a distance from one another and serve as flow paths for the refrigerant extending in the circumferential direction; and
a third core (30) in which a plurality of axial refrigerant paths (31) serving as flow paths for the refrigerant that extend in an axial direction and open at ends in the axial direction are formed, wherein
the first core (10) and the second core (20) are adjacent in the axial direction, each of two ends in the circumferential direction of the first circumferential refrigerant path (11) is connected to a different one of the two second circumferential refrigerant paths (21), and
a plurality of the axial refrigerant paths (31) are connected to at least one of the first circumferential refrigerant paths (11) or one of the second circumferential refrigerant paths (21).

2. The stator core (100) according to Claim 1, wherein the stator core (100) is constituted of the first core (10), the second core (20), and the third core (30).

3. The stator core (100) according to Claim 1 or 2, wherein a sum of a length in the axial direction of the first core (10) and a length in the axial direction of the second core (20) is smaller than a sum of lengths in the axial direction of the third cores (30).

4. The stator core (100) according to any one of Claims 1 to 3, wherein the first core (10) and the second core (20) are located in a central region in the axial direction of the stator core (100).

5. The stator core (100) according to any one of Claims 1 to 4, wherein each of the first circumferential refrigerant paths (11) and each of the second circumferential refrigerant paths (21) are connected to the axial refrigerant path (31) by a connecting portion (12, 22) that becomes narrower in a radial direction toward the axial refrigerant path (31).

6. The stator core (100) according to any one of Claims 1 to 5, further comprising:
a supply port (24) for the refrigerant that is formed in the first core (10) and connected to the second circumferential refrigerant path (21) or a supply port (24) for the refrigerant that is formed in the second core (20) and connected to the first circumferential refrigerant path (11), wherein
an effective cross-sectional area perpendicular to a flow of a refrigerant path from the supply port (24) to openings at the ends of the axial refrigerant paths (31) in the axial direction gradually increases.

7. The stator core (100) according to any one of Claims 1 to 5, further comprising:
a supply port (24) for the refrigerant that is formed in the first core (10) and connected to the second circumferential refrigerant path (21) or a supply port (24) for the refrigerant that is formed in the second core (20) and connected to the first circumferential refrigerant path (11), wherein,
in a plane perpendicular to the axial direction, a sum of areas of regions where the first circumferential refrigerant paths (11) and the second circumferential refrigerant paths (21) overlap is larger than a cross-sectional area perpendicular to a flow of the supply port (24).
